# EUROPEAN PATENT APPLICATION

(11) **EP 4 683 023 A2**
(43) Date of publication of application: **21.01.2026**
(21) Application number: 25174720.0
(22) Date of filing: 07.05.2025
(51) Int. Cl.: H01M 10/04

(54) **ELECTRODE MANUFACTURING SYSTEM AND DEVICE**

(30) Priority: 21.06.2024 KR 20240081231
(71) Applicant: SAMSUNG SDI CO., LTD., Yongin-si, Gyeonggi-do 17084 (KR)
(72) Inventor: JI, Daeyoung, 17084 Yongin-Si (KR)
(74) Representative: Marks & Clerk LLP

(57) **Abstract**

An electrode transfer table includes: a base plate; a support portion configured to protrude from the base plate in a vertical direction; and a sheet seating portion configured to protrude from an end of the support portion in a direction facing the base plate and on which an electrode sheet for forming a pair of electrodes may be arranged, wherein the sheet seating portion may include: a first sheet seating portion on which a first electrode of the electrode sheet may be seated; and a second sheet seating portion spaced apart from the first sheet seating portion with a gap therebetween and on which a second electrode of the electrode sheet may be seated.

## Description

### BACKGROUND

### 1. Field

Aspects of embodiments of the present disclosure relate to an electrode manufacturing system and device.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

In general, electrodes such as a positive electrode and a negative electrode may be manufactured by applying an active material to an electrode sheet and forming an electrode tab. After the electrode sheet is positioned on a pallet and then moved, the electrode sheet may be moved again to a cutting device to manufacture the electrode. Manufacturing the electrode in this manner may complicate the work process because the electrode sheet is moved repeatedly. In addition, because curls occur in the electrode sheet, the product may be damaged when the product is moved.

The above information disclosed in this Background section is for enhancement of understanding of the background of the present disclosure, and therefore, it may contain information that does not constitute related (or prior) art.

### SUMMARY

Aspects of embodiments of the present disclosure provide an electrode transfer table, an electrode transfer device, and an electrode manufacturing system including the same.

These and other aspects and features of the present disclosure will be described in or will be apparent from the following description of embodiments of the present disclosure.

According to one or more embodiments of the present disclosure, an electrode transfer table includes: a base plate; a support portion configured to protrude from the base plate in a vertical direction; and a sheet seating portion configured to protrude from an end of the support portion in a direction facing the base plate and on which an electrode sheet for forming a pair of electrodes may be arranged, wherein the sheet seating portion may include: a first sheet seating portion on which a first electrode of the electrode sheet may be seated; and a second sheet seating portion spaced apart from the first sheet seating portion with a gap therebetween and on which a second electrode of the electrode sheet may be seated.

In an embodiment, the electrode sheet may be cut into the first electrode and the second electrode by an upper blade and a lower blade while the electrode sheet may be arranged on the sheet seating portion.

In an embodiment, the gap has a size for the upper blade and the lower blade to be inserted.

In an embodiment, the support portion has a size configured to receive the lower blade between the base plate and the sheet seating portion.

In an embodiment, the sheet seating portion may include a plurality of suction holes configured to remove air from the electrode sheet while the electrode sheet may be seated.

In an embodiment, the support portion may include a connecting portion connected to a vacuum exhaust device that is configured to communicate with the plurality of suction holes and remove air.

In an embodiment, the electrode transfer table further includes a clamping portion provided on the sheet seating portion and configured to press the electrode sheet to come into contact with the sheet seating portion.

In an embodiment, the clamping portion may include: a pressing portion configured to come into contact with the electrode sheet; and a driving portion provided on the sheet seating portion to move the pressing portion.

In an embodiment, the driving portion may be configured to rotate the pressing portion and move the pressing portion downward from a position where the pressing portion may be not arranged on an upper side of the electrode sheet.

In an embodiment, the sheet seating portion may include a plurality of suction holes configured to remove air from the electrode sheet while the electrode sheet may be seated.

In an embodiment, the support portion may include a connecting portion connected to a vacuum exhaust device that is configured to communicate with the plurality of suction holes and is further configured to remove air.

According to one or more embodiments of the present disclosure, an electrode transfer device includes: an electrode transfer table on which an electrode sheet for forming a pair of electrodes may be arranged; a transport plate to which the electrode transfer table may be fastened; and a transport portion configured to move the transport plate, wherein the electrode transfer table may include: a base plate; a support portion protruding from the base plate in a vertical direction; and a sheet seating portion protruding from an end of the support portion in a direction facing the base plate and on which the electrode sheet may be arranged, wherein the sheet seating portion may include: a first sheet seating portion on which a first electrode of the electrode sheet may be seated; and a second sheet seating portion spaced apart from the first sheet seating portion with a gap therebetween and on which a second electrode of the electrode sheet may be seated.

In an embodiment, the transport plate may include a fastening groove into which a fastening projection protruding from the base plate may be inserted.

In an embodiment, the transport portion may include: a fastener connected to the transport plate; a driving motor configured to rotate the fastener; and a guide bar inserted into the transport plate to guide a sliding movement of the transport plate.

In an embodiment, the transport portion may include a rail portion that may be provided to face a magnet provided on the transport plate and which forms a magnetic field to move the transport plate.

In an embodiment, the electrode transfer table further includes a sensor configured to measure a position and a speed of the transport plate based on the magnetic field formed by the rail portion (or the magnet).

In an embodiment, the transport portion may include: a belt fastened to the transport plate; and a driving motor configured to rotate the belt to move the transport plate.

According to one or more embodiments of the present disclosure, an electrode manufacturing system includes: an electrode transfer table on which an electrode sheet for forming a pair of electrodes may be arranged; a transport plate to which the electrode transfer table may be fastened; a transport portion configured to move the transport plate; and a cutting portion configured to cut the electrode sheet into a first electrode and a second electrode while the electrode sheet may be arranged on the electrode transfer table; and a discharge portion configured to discharge the cut first electrode and the cut second electrode.

In an embodiment, the electrode transfer table may include: a base plate; a support portion protruding from the base plate in a vertical direction; and a sheet seating portion protruding from an end of the support portion in a direction facing the base plate and on which the electrode sheet may be arranged, wherein the sheet seating portion may include: a first sheet seating portion on which a first electrode of the electrode sheet may be seated; and a second sheet seating portion spaced apart from the first sheet seating portion with a gap therebetween and on which a second electrode of the electrode sheet may be seated.

In an embodiment, the system further includes: an alignment inspection portion configured to measure an arrangement state of the electrode sheets; a quality inspection portion configured to inspect whether the cut first electrode and the cut second electrode may be defective; and a defective electrode discharge portion configured to discharge an electrode determined to be defective.

According to some embodiments of the present disclosure, the cutting process may be performed on the electrode transfer table that transfers the electrode sheet, thereby improving work efficiency.

According to some embodiments of the present disclosure, the electrode sheet may be fixed in close contact with the electrode transfer table, thereby preventing curls from occurring in the electrode.

According to some embodiments of the present disclosure, the electrode transfer table may be attached to and detached from the transport portion, thereby capable of applying to various types of transport portions.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing an example of an electrode transfer table according to an embodiment of the present disclosure.
FIG. 2 illustrates an example of performing a cutting process by using an electrode transfer table according to an embodiment of the present disclosure.
FIG. 3 illustrates a perspective view showing an example of an electrode transfer table according to an embodiment of the present disclosure.
FIGS. 4 and 5 illustrate an example in which a vacuum exhaust device is connected to the electrode transfer table according to the embodiment of FIG. 3.
FIG. 6 illustrates a perspective view showing an example of an electrode transfer table according to an embodiment of the present disclosure.
FIG. 7 illustrates an example of the operation of the electrode transfer table according to the embodiment of FIG. 6.
FIG. 8 illustrates a perspective view showing an example of an electrode transfer table according to an embodiment of the present disclosure.
FIG. 9 illustrates a perspective view showing an example of an electrode transfer device according to an embodiment of the present disclosure.
FIG. 10 illustrates a perspective view showing an example of an electrode transfer table and a transport plate according to an embodiment of the present disclosure.
FIG. 11 illustrates a perspective view showing an example of an electrode transfer device according to an embodiment of the present disclosure.
FIG. 12 illustrates a perspective view showing an example of an electrode transfer device according to an embodiment of the present disclosure.
FIG. 13 illustrates an example of an electrode manufacturing system according to an embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

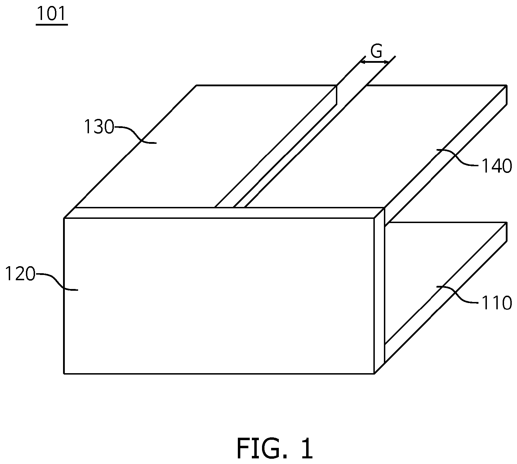

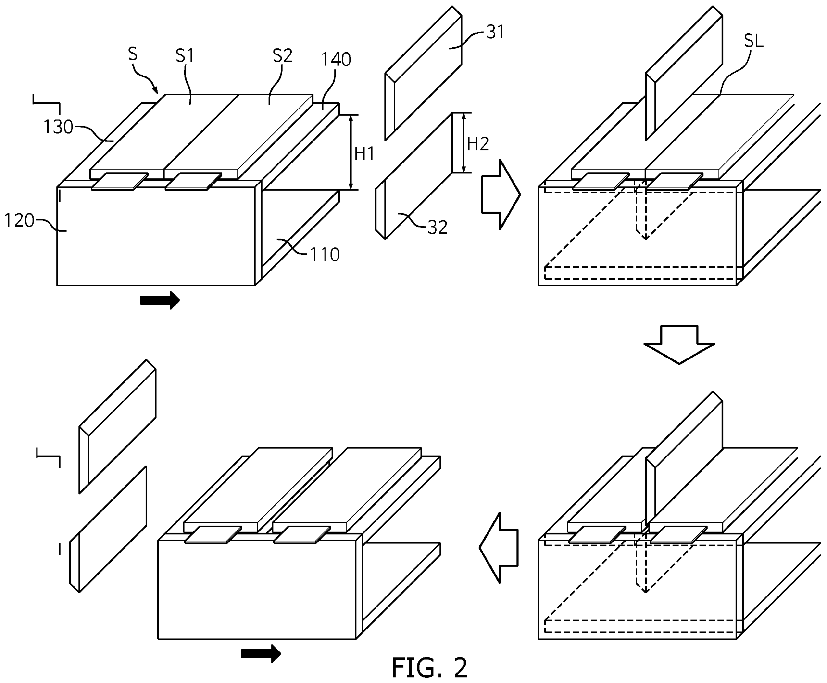

FIG. 1 illustrates a perspective view showing an example of an electrode transfer table according to an embodiment of the present disclosure, and FIG. 2 illustrates an example of performing a cutting process by using an electrode transfer table according to an embodiment of the present disclosure.

Referring to FIGS. 1 and 2, an electrode transfer table 101 according to an embodiment of the present disclosure may transfer an electrode sheet S on which a mixture layer and an electrode tab are formed. The electrode transfer table 101 has a gap G formed in the central region (e.g., at the center of the table). The gap G may allow the manufacturing of an electrode by cutting the electrode sheet S while the sheet is seated on the transfer table.

In an embodiment, the electrode transfer table 101 may include a base plate 110, a support portion 120 that protrudes from the base plate 110 in a vertical direction, and sheet seating portions 130 and 140 which protrude from an end of the support portion 120 in a direction facing the base plate 110. The electrode sheet S forming (e.g., continuously forming) a pair of electrodes may be placed on the sheet seating portions 130 and 140. The sheet seating portions 130 and 140 may include a first sheet seating portion 130 on which a first electrode S1 of the electrode sheet S is seated, and a second sheet seating portion 140 which is spaced apart from the first sheet seating portion 130 to have a gap G, and on which a second electrode S2 of the electrode sheet S is seated.

The sheet seating portions 130 and 140 are described as including the first sheet seating portion 130 and the second sheet seating portion 140, but the present disclosure is not limited thereto. In an embodiment, the electrode sheet S has three or more electrodes that are connected, and a corresponding number of sheet seating portions may be provided and arranged to be spaced apart from each other with a gap therebetween. Hereinafter, the description will be based on the assumption that the sheet seating portions 130 and 140 include two sheet seating portions, that is, the first sheet seating portion 130 and the second sheet seating portion 140.

The electrode sheet S may be arranged on the electrode transfer table 101 in a state where the first electrode S1 and the second electrode S2 are connected to each other. In order to cut the electrode sheet S into the first electrode S1 and the second electrode S2, a cutting line SL may be formed between the first electrode S1 and the second electrode S2. In an embodiment where the electrode sheet S is seated on the sheet seating portions 130 and 140, the cutting line SL may be positioned above the gap G formed between the first sheet seating portion 130 and the second sheet seating portion 140. In some embodiments, the gap G may be formed to a size that allows an upper blade 31 and a lower blade 32 to be inserted.

The support portion 120 may be formed to a size that allows the lower blade 32 to be inserted between the base plate 110 and the sheet seating portions 130 and 140. The base plate 110 may be formed at one end of the support portion 120 in a vertical direction, and the sheet seating portions 130 and 140 may be formed at the other end of the support portion 120 in a vertical direction. The base plate 110 and the seat seating portions 130 and 140 may be arranged to be parallel to one another and to face each other. In order for the lower blade 32 to be inserted between the base plate 110 and the sheet seating portions 130 and 140, a height H1 at which the base plate 110 and the sheet seating portions 130 and 140 are spaced apart may be greater than a height H2 of the lower blade 32.

According to this configuration, the electrode sheet S may be cut into the first electrode S1 and the second electrode S2 by the upper blade 31 and the lower blade 32 while the electrode sheet S is arranged on the sheet seating portions 130 and 140.

In an embodiment, the cutting line SL of the electrode sheet S may be positioned above the gap G formed between the first sheet seating portion 130 and the second sheet seating portion 140. The electrode transfer table 101 may be moved in a direction where the blade portion is positioned, and the lower blade 32 may be inserted between the base plate 110 and the sheet seating portions 130 and 140. In an embodiment where the upper blade 31 and the lower blade 32 are positioned in the gap G formed between the first sheet seating portion 130 and the second sheet seating portion 140, the movement of the electrode transfer table 101 may be stopped. By moving the upper blade 31 and the lower blade 32, the electrode sheet S may be cut along the cutting line SL. In this regard,, the upper blade 31 and the lower blade 32 may be inserted into the gap G to cut the electrode sheet S. The cutting process may be completed by moving the electrode transfer table 101 after separating the upper blade 31 and the lower blade 32 from the sheet seating portions 130 and 140.

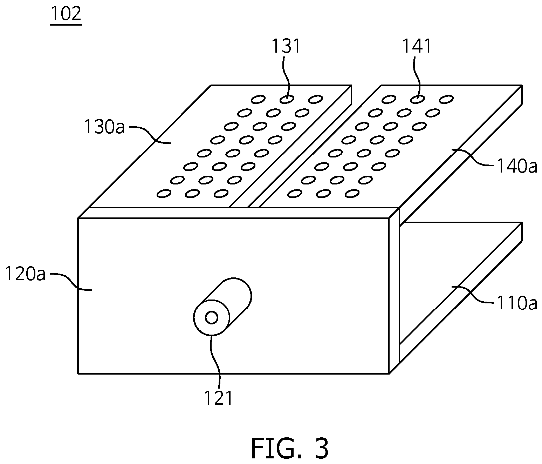

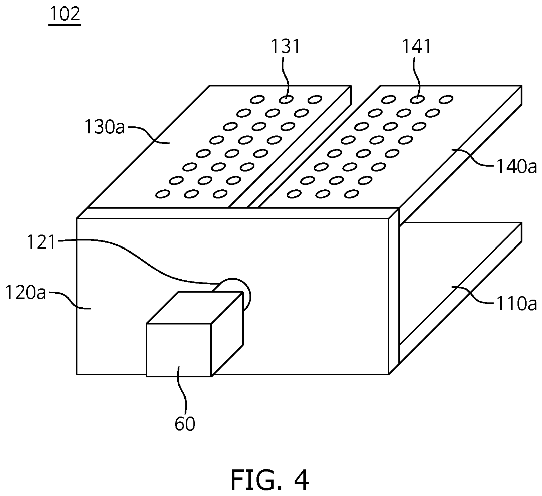

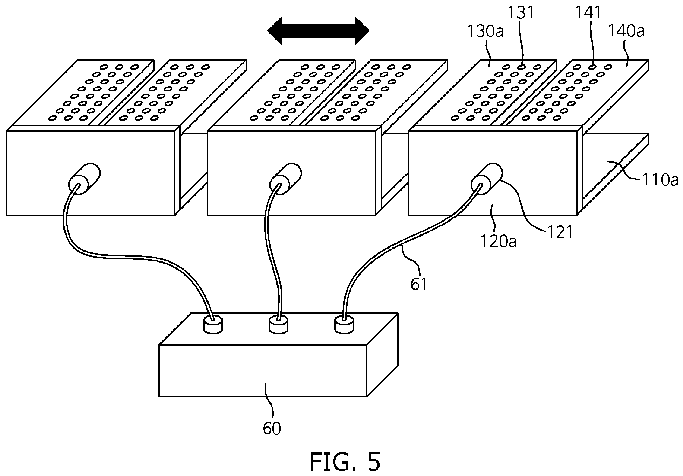

FIG. 3 illustrates a perspective view showing an example of an electrode transfer table according to an embodiment of the present disclosure, and FIGS. 4 and 5 illustrate examples in which a vacuum exhaust device is connected to the electrode transfer table(s) according to the embodiment of FIG. 3.

Referring to FIGS. 3 to 5, an electrode transfer table 102 according to an embodiment of the present disclosure has a configuration identical to or similar to that of the electrode transfer table 101 described with reference to FIG. 1, and includes an additional configuration for vacuum absorption of an electrode sheet S. According to this embodiment, a base plate 110a, a support portion 120a, a first sheet seating portion 130a, and a second sheet seating portion 140a may have the same or similar configuration as components with the same reference numerals as in the embodiment of FIG. 1.

The electrode transfer table 102 may have a plurality of suction holes 131 and 141 formed in the sheet seating portions 130a and 140a to suck-in, draw-in, reduce, or remove air and vacuum-absorb the electrode sheet S while the electrode sheet S is seated thereon. That is, the plurality of suction holes 131 may be formed in the first sheet seating portion 130a, and the plurality of suction holes 141 may also be formed in the second sheet seating portion 140a. The support portion 120a may include a connecting portion 121 that is connected to a vacuum exhaust device 60 that communicates with the plurality of suction holes 131 and 141 and sucks or draws in air.

In an embodiment where the vacuum exhaust device 60 is operated while the electrode sheet S is seated on the electrode transfer table 102, air is exhausted or drained through the connecting portion 121, and vacuum pressure (i.e. suction or a lowered fluid pressure) is applied to the plurality of suction holes 131 and 141 so that the electrode sheet S may be fixed in contact (e.g., in close contact) with the electrode transfer table 102. According to this embodiment, curls may be reduced or prevented from occurring in the electrode sheet S.

In an embodiment, the vacuum exhaust device 60 may be configured as an ejector and moved together when the electrode transfer table 102 is moved while connected to the connecting portion 121.

In some embodiments, the vacuum exhaust device 60 may be configured as a vacuum (suction) pump and connected to the connecting portion 121 through an exhaust line 61, as illustrated in FIG. 5. The exhaust line 61 may be formed of a flexible material. In some embodiments, the flexible material provides vacuum pressure (i.e. reduced fluid pressure) even when the electrode transfer table 102 is moved. In some embodiments, the vacuum exhaust device 60 may be configured to provide vacuum pressure (i.e. reduced fluid pressure) by being connected to one or more (e.g., each) of a plurality of electrode transfer tables 102 through a plurality of exhaust lines 61.

In some embodiments, the configuration for providing vacuum pressure to the plurality of suction holes 131 and 141 is not limited thereto, and various known methods may be applied.

In some embodiments, after the electrode sheet S is arranged on the sheet seating portions 130a and 140a, the vacuum exhaust device 60 is operated so that vacuum pressure may be provided to the suction hole 131 of the first sheet seating portion 130a and the suction hole 141 of the second sheet seating portion 140a. In this regard, the first electrode S1 of the electrode sheet S may be absorbed into the first sheet seating portion 130a, and the second electrode of the electrode sheet S may be absorbed into the second sheet seating portion 140a. According to this embodiment, when the electrode sheet S is cut by using the blade, the electrode sheet S is fixed or secured so as not to move or to reduce the movement of the electrode sheet S, allowing the electrode sheet S to be cut at a more accurate position.

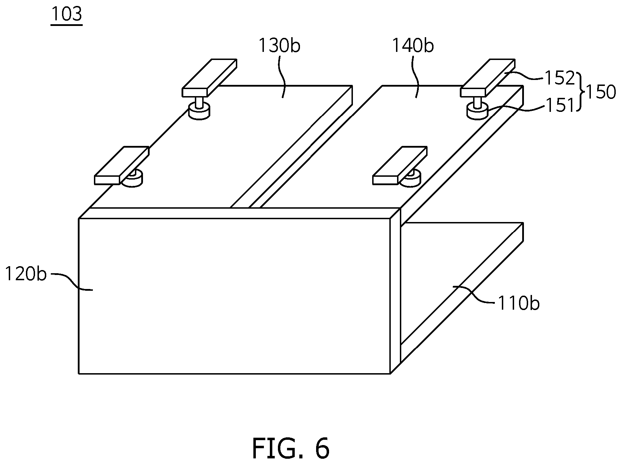

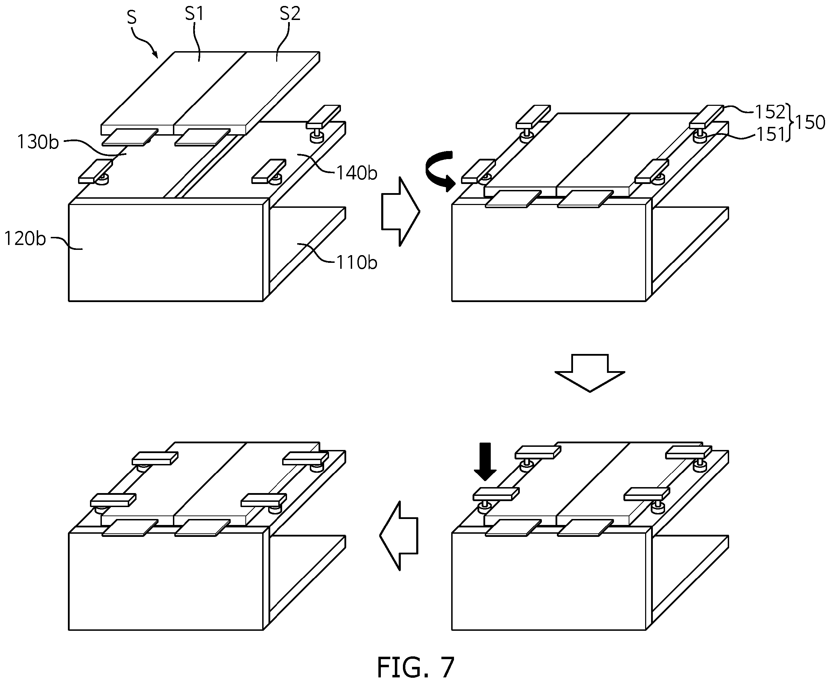

FIG. 6 illustrates a perspective view showing an example of an electrode transfer table according to an embodiment of the present disclosure, and FIG. 7 illustrates an example of the operation of the electrode transfer table according to the embodiment of FIG. 6.

Referring to FIGS. 6 and 7, an electrode transfer table 103 according to an embodiment of the present disclosure has a configuration identical to or similar to that of the electrode transfer table 101 described with reference to FIG. 1, and includes an additional configuration for fixing an electrode sheet S. According to this embodiment, a base plate 110b, a support portion 120b, a first sheet seating portion 130b, and a second sheet seating portion 140b may have the same or similar configuration as components with the same reference numbers as in the embodiment of FIG. 1.

The electrode transfer table 103 may be provided with the sheet seating portions 130b and 140b and may include a clamping portion 150 that presses the electrode sheet S to come into contact (e.g., close contact) with the sheet seating portions 130b and 140b. In an embodiment, the clamping portion 150 may include a pressing portion 152 that is in contact (e.g., close contact) with the electrode sheet S, and a driving portion 151 that is provided on the sheet seating portion 130b and 140b and moves the pressing portion 152.

The driving portion 151 may operate to rotate the pressing portion 152 from a position where the pressing portion 152 is not arranged on the upper side of the electrode sheet S to a position where the pressing portion 152 is arranged on the upper side of the electrode sheet S and the pressing portion 152 is moved downward so that the pressing portion 152 brings the electrode sheet S into contact (e.g., close contact) with the sheet seating portions 130b and 140b.

According to the embodiment of FIGS. 6-7, the pressing portion 152 may be positioned so that the pressing portion 152 is not arranged on the upper side of the portion where the electrode sheet S is seated in the sheet seating portions 130b and 140b. After the electrode sheet S is arranged on the sheet seating portions 130b and 140b, the driving portion 151 may operate to rotate the pressing portion 152 so that the pressing portion 152 may be positioned (e.g. in part) above the electrode sheet S. The driving portion 151 may operate to move the pressing portion 152 downward so that the pressing portion 152 may be positioned to press the electrode sheet S. According to this embodiment, when the electrode sheet S is cut by using the blade, the electrode sheet S is fixed or secured so as not to move or to reduce the movement of the electrode sheet S, allowing the electrode sheet S to be cut at a more accurate position.

The driving portion 151 may be formed of an actuator, a driving motor, etc. In some embodiments, the driving portion 151 may be configured in any shape that allows the driving portion 151 to move up and down while rotating the pressing portion 152.

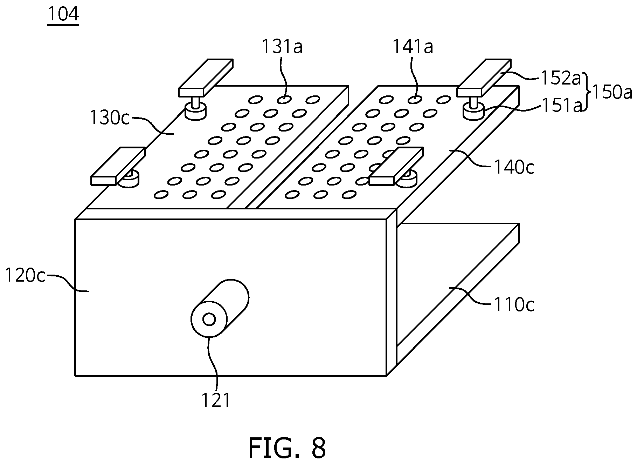

FIG. 8 illustrates a perspective view showing an example of an electrode transfer table according to an embodiment of the present disclosure.

Referring to FIG. 8, an electrode transfer table 104 according to an embodiment of the present disclosure has a configuration identical to or similar to that of the electrode transfer table 103 described with reference to FIG. 6, and includes an additional configuration for vacuum absorption of an electrode sheet S (i.e. suction). According to this embodiment, a base plate 110c, a support portion 120c, a first sheet seating portion 130c, a second sheet seating portion 140c, and a clamping portion 150a may have the same or similar configuration as components with the same reference numbers as in the embodiment of FIG. 6.

According to the embodiment of FIG. 8, the electrode transfer table 104 may fix the electrode sheet S through the clamping portion 150a and may additionally fix the electrode sheet S through vacuum pressure (suction) by forming a suction hole 131a of the first sheet seating portion 130c and a suction hole 141a of the second sheet seating portion 140c.

According to the embodiment of FIG. 8, after the electrode sheet S is arranged on the sheet seating portions 130c and 140c, the driving portion 151a may operate to rotate the pressing portion 152a so that the pressing portion 152a is positioned (e.g. in part) above the electrode sheet S, and then the pressing portion 152a is moved downward so that the pressing portion 152a may be positioned to press the electrode sheet S. By operating a vacuum exhaust device 60, vacuum pressure (i.e. suction) may be provided to the suction hole(s) 131a of the first sheet seating portion 130c and the suction hole(s) 141a of the second sheet seating portion 140c. In this regard, the first electrode S1 of the electrode sheet S may be absorbed into (onto) the first sheet seating portion 130c, and the second electrode of the electrode sheet S may be absorbed into (onto) the second sheet seating portion 140c. According to the embodiment of FIG. 8, the electrode sheet S may be fixed more stably through the vacuum pressure (i.e. suction) applied to the clamping portion 150a and the suction holes 131a and 141a.

In some embodiments, after the electrode sheet S is arranged on the sheet seating portions 130c and 140c, the vacuum exhaust device 60 may be operated to fix the electrode sheet S with vacuum pressure (suction), and the driving portion 151a may be operated so that the electrode sheet S is pressed by the pressing portion 152a.

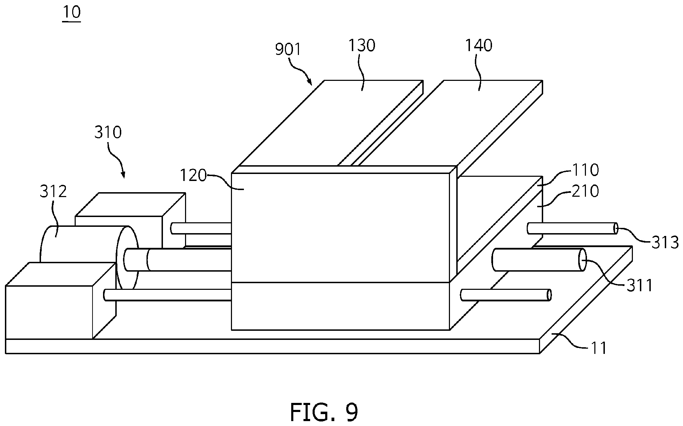

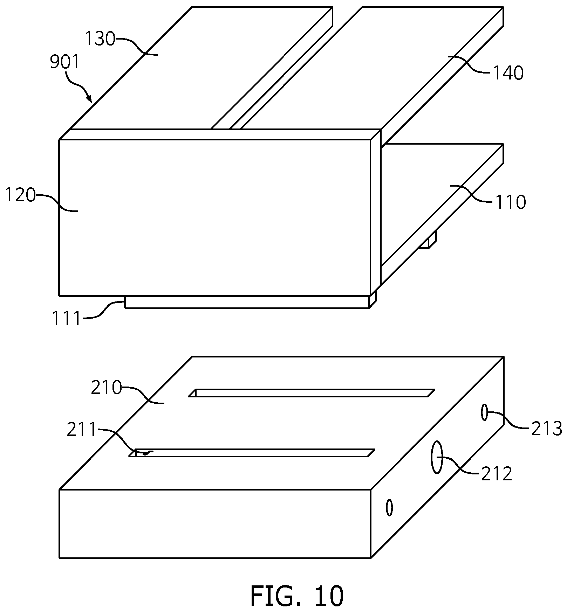

FIG. 9 illustrates a perspective view showing an example of an electrode transfer device according to an embodiment of the present disclosure, and FIG. 10 illustrates a perspective view showing an example of an electrode transfer table and a moving or transport plate according to an embodiment of the present disclosure.

Referring to FIGS. 9 and 10, an electrode transfer device 10 according to an embodiment of the present disclosure may include an electrode transfer table 901 on which an electrode sheet is arranged, a moving or transport plate 210 to which the electrode transfer table 101 is fastened, and a moving or transport portion 310 that moves the moving plate 210.

The electrode transfer table 901 of FIG. 9 may be the electrode transfer table 101 described with reference to FIG. 1. In some embodiments, the electrode transfer table 901 is not limited thereto, and the electrode transfer table 901 of FIG. 9 may be embodied as the electrode transfer table 102 described with reference to FIG. 3, the electrode transfer table 103 described with reference to FIG. 6, or the electrode transfer table 104 described with reference to FIG. 8.

The electrode transfer table 901 may be configured to be detachable from the moving plate 210. In some embodiments, the electrode transfer table may be repositioned as needed. In an embodiment, a fastening projection 111 may be formed to protrude on a bottom surface of a base plate 110 of the electrode transfer table 901, and a fastening groove 211 into which the fastening projection 111 is inserted may be formed on the moving plate 210 (see FIG. 10). The fastening projection 111 may be detachably fastened to the fastening groove 211. In some embodiments, the configuration for detachably attaching the electrode transfer table 901 and the moving plate 210 is not limited thereto, and various fastening structures may be applied.

The moving portion 310 is configured to be connected to the moving plate 210 and move the moving plate 210. In an embodiment, the moving portion 310 may include a fastener or a lead screw 311 that is screw connected (screwed, fastened, or connected) to the moving plate 210, a driving motor 312 that is provided in a base portion 11 and rotates the lead screw 311, and at least one guide bar 313 that is provided in the base portion 11 and inserted into the moving plate 210 and guides the sliding movement of the moving plate 210. A lead screw fastening groove 212 (see FIG. 10) into which the lead screw 311 is inserted and screw connected may be formed in the center of the moving plate 210, and guide bar insertion grooves 213 into which the guide bars 313 are inserted may be formed on both sides.

According to the embodiment of FIGS. 9-10, when the driving motor 312 operates to rotate the lead screw 311, the moving plate 210 may move linearly along the guide bar(s) 313, causing movement of the electrode transfer table 901. A plurality of moving plates 210 may be installed on the lead screw 311 so that a plurality of electrode transfer tables 901 may be moved simultaneously.

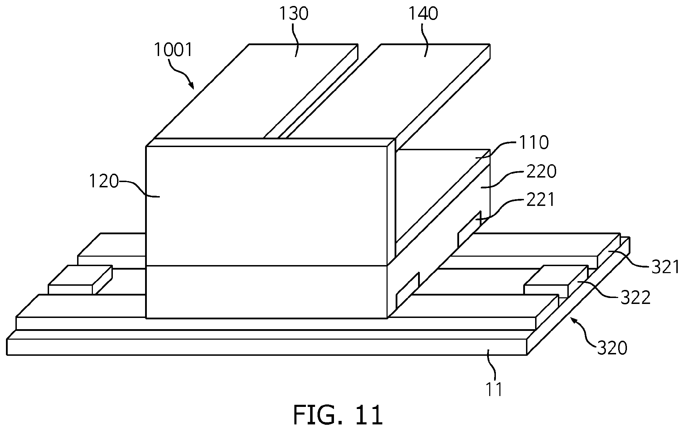

FIG. 11 illustrates a perspective view showing an example of an electrode transfer device according to an embodiment of the present disclosure.

Referring to FIG. 11, an electrode transfer device according to an embodiment of the present disclosure may include an electrode transfer table 1001 on which an electrode sheet is arranged, a moving plate 220 to which the electrode transfer table 1001 is fastened, and a moving portion 320 that moves the moving plate 220.

The electrode transfer table 1001 may be the electrode transfer table 101 described with reference to FIG. 1. In some embodiments, the electrode transfer table 101 is not limited thereto, and the electrode transfer table 1001 may be configured as the electrode transfer tables described with reference to FIGS. 3 to 8. The electrode transfer table 1001 may be configured to be detachable from the moving plate 220.

The moving portion 320 may include one or more rail portion 321 that is provided on a base portion 11 to face one or more magnet 221 provided on the moving plate 220 and forms a magnetic field to move the moving plate 220. In some embodiments, the moving portion 320 may be configured to move the moving plate 220 by magnetic levitation using a magnetic field generated from the magnet(s) 221 and the rail portion(s) 321.

In an embodiment, the or each rail portion 321 may include a wire coil that transmits current to generate the magnetic field. In an embodiment where the magnetic field of the magnet(s) 221 of the moving plate 220 and the rail portion(s) 321 interacts, repulsive force may be generated, which lifts the moving plate 220 above the rail portion(s) 321 and floats the moving plate 220 in the air. In an embodiment where the moving plate 220 is floating in the air, the moving plate 220 may move forward by using a linear synchronous motor. The linear synchronous motor may be provided along the rail portion 321 and may generate the magnetic field that interacts with the magnet 221 of the moving plate 220 to move the moving plate 220 forward. Because this corresponds to an embodiment of magnetic levitation, various known methods may be applied as long as the moving plate 220 may be moved in a levitated state using a magnet and a magnetic field.

The moving portion 320 may include a Hall sensor 322 that measures the position and speed of the moving plate 220 by measuring the magnetic field formed in the rail portion 321. One or more Hall sensors 322 may be installed in the base portion 11 and arranged at a certain interval along the rail portion 321. The Hall sensor 322 may be a sensor that measures the magnetic field generated in the rail portion 321, and may measure the position and speed of the moving plate 220 through the measured magnetic field. In some embodiments, the movement and speed of the moving plate 220 may be controlled by feeding back the magnetic field measured by the Hall sensor 322 and controlling the magnetic field generated in the rail portion 321.

A plurality of moving plates 320 may be installed on the rail portion 321 so that a plurality of electrode transport tables 101 may be moved simultaneously or concurrently. According to this embodiment, the movement gap between the moving plates 320 may be controlled through the magnetic field measured through the Hall sensor 322.

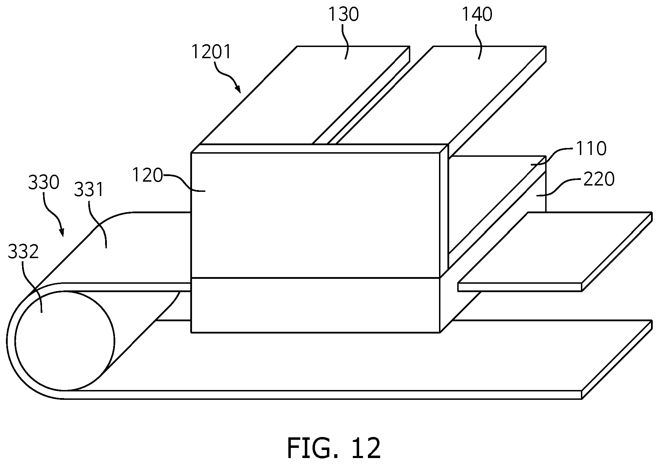

FIG. 12 illustrates a perspective view showing an example of an electrode transfer device according to an embodiment of the present disclosure.

Referring to FIG. 12, an electrode transfer device according to an embodiment of the present disclosure may include an electrode transfer table 1201 on which an electrode sheet is arranged, a moving plate 220 to which the electrode transfer table 1201 is fastened, and a moving portion 330 that moves the moving plate 220.

The electrode transfer table 1201 may be the electrode transfer table 1201 described with reference to FIG. 1. In some embodiments, the electrode transfer table 1201 is not limited thereto, and the electrode transfer tables described with reference to FIGS. 3 to 8 may be applied. The electrode transfer table 1201 may be configured to be detachable from the moving plate 220.

In an embodiment, the moving portion 330 may include a caterpillar track belt 331 connected to the moving plate 220 and a driving motor 332 that rotates the caterpillar track belt 331 to move the moving plate 220. The caterpillar track belt 331 may be fastened to the moving plate 220 by penetrating through the moving plate 220.

According to the embodiment of FIG. 12, if the driving motor 332 rotates, the caterpillar track belt 331 may rotate and move the moving plate 220 so that the electrode transfer table 1201 may be moved. A plurality of moving plates 220 may be installed on the caterpillar track belt 331 so that a plurality of electrode transfer tables 1201 may be moved simultaneously or concurrently.

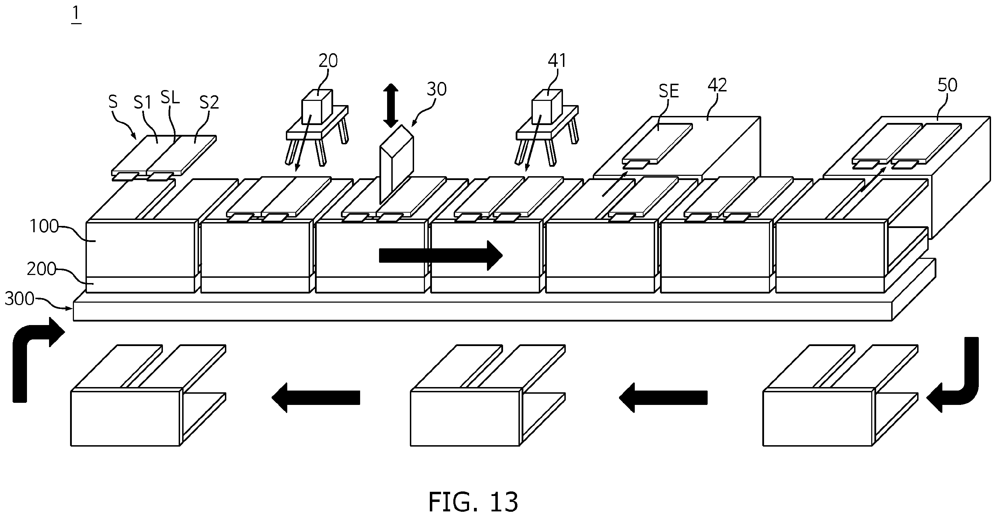

FIG. 13 illustrates an example of an electrode manufacturing system according to an embodiment of the present disclosure.

Referring to FIG. 13, an electrode manufacturing system 1 according to an embodiment of the present disclosure may include an electrode transfer table 100 on which an electrode sheet S is arranged, a moving plate 200 to which the electrode transfer table 100 is fastened, a moving portion 300 that moves the moving plate 200, a cutting portion 30 that cuts the electrode sheet S, and a discharge portion 50 that discharges the cut electrode.

The electrode transfer table 100 may be any one of the electrode transfer tables described with reference to FIGS. 1 to 8. The moving portion 300 may be any one of the moving portions described with reference to FIGS. 9 to 12. The moving plate 200 may be configured as a moving plate corresponding to any one of the moving portions described with reference to FIGS. 9 to 12.

Under this configuration, the electrode manufacturing system 1 may arrange the electrode sheet S on the electrode transfer table 100 and then operate the moving portion 300 so that the electrode transfer table 100 may be moved to the cutting portion 30 together with the moving plate 200. The moving portion 300 may be configured to stop at the cutting portion 30 and cut the electrode sheet S and then move the electrode transfer table 100 again so that the cut electrode is discharged from the discharge portion 50.

In an embodiment, the electrode manufacturing system 1 may include an alignment inspection portion 20 that measures the arrangement state of the electrode sheets S. The alignment inspection portion 20 may be a vision inspection device configured to confirm the arrangement state of the electrode sheets S arranged on the electrode transfer table 100. For example, after the cutting line SL of the electrode sheet S measured in the alignment inspection portion 20 is confirmed, the positions of the upper and lower blades of the cutting portion 30 may be adjusted. In some embodiments, the position of the electrode transfer table may be adjusted after the cutting line SL of the electrode sheet S measured in the alignment inspection portion 20 is confirmed.

As an example, the electrode manufacturing system 1 may include a quality inspection portion 41 that inspects whether the cut first and second electrodes are defective, and a defective electrode discharge portion 42 that discharges an electrode SE determined to be defective. The quality inspection portion 41 may be a vision inspection device that photographs the electrode sheet S to determine whether the electrode is abnormal. According to the embodiment of FIG. 13, if the quality inspection portion 41 determines that the electrode is a defective electrode SE, the defective electrode SE (e.g., only the defective electrode SE) may be preferentially discharged through the defective electrode discharge portion 42.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

## Claims

1. An electrode transfer table (101, 102, 103, 104) comprising:
a base plate (110);
a support portion (120) configured to protrude from the base plate (110) in a vertical direction; and
a sheet seating portion (130, 140) configured to protrude from an end of the support portion (120) in a direction facing the base plate (110) and on which an electrode sheet (S) for forming a pair of electrodes (S1, S2) is arranged,
wherein the sheet seating portion (130, 140) comprises:
a first sheet seating portion (130) on which a first electrode (S1) of the electrode sheet (S) is seated; and
a second sheet seating portion (140) spaced apart from the first sheet seating portion (130) with a gap (G) therebetween and on which a second electrode (S2) of the electrode sheet (S) is seated.

2. The electrode transfer table (101, 102, 103, 104) as claimed in claim 1, wherein the electrode sheet (S) is cut into the first electrode (S1) and the second electrode (S2) by an upper blade (31) and a lower blade (32) while the electrode sheet (S) is arranged on the sheet seating portion (130, 140).

3. The electrode transfer table (101, 102, 103, 104) as claimed in claim 2, wherein the support portion (120) has a size configured to receive the lower blade (32) between the base plate (110) and the sheet seating portion (130, 140).

4. The electrode transfer table (102) as claimed in any one of the preceding claims, wherein the sheet seating portion (130, 140) comprises a plurality of suction holes (131, 141) configured to remove air from the electrode sheet (S) while the electrode sheet (S) is seated.

5. The electrode transfer table (103, 104) as claimed in any one of the preceding claims, further comprising a clamping portion (150, 150a) provided on the sheet seating portion (130, 140) and configured to press the electrode sheet (S) to come into contact with the sheet seating portion (130, 140).

6. The electrode transfer table (103, 104) as claimed in claim 5, wherein the clamping portion (150, 150a) comprises:
a pressing portion (152, 152a) configured to come into contact with the electrode sheet (S); and
a driving portion (151, 151a) provided on the sheet seating portion (130, 140) to move the pressing portion (152, 152a).

7. The electrode transfer table (104) of claim 5 or claim 6, wherein the sheet seating portion (130, 140) comprises a plurality of suction holes (131a, 141a) configured to remove air from the electrode sheet (S) while the electrode sheet (S) is seated.

8. An electrode transfer device (10) comprising:
an electrode transfer table (901, 1001, 1201) on which an electrode sheet (S) for forming a pair of electrodes (S1, S2) is arranged;
a transport plate (210, 220) to which the electrode transfer table (901, 1001, 1201) is fastened; and
a transport portion (310, 320, 330) configured to move the transport plate (210, 220),
wherein the electrode transfer table (901, 1001, 1201) is in accordance with any one of the preceding claims.

9. The electrode transfer device (10) as claimed in claim 8, wherein the transport plate (210) comprises a fastening groove (211) into which a fastening projection (111) protruding from the base plate (110) is inserted.

10. The electrode transfer device (10) as claimed in claim 8 or claim 9, wherein the transport portion (310) comprises:
a fastener (311) connected to the transport plate (210);
a driving motor (312) configured to rotate the fastener (311); and
a guide bar (313) inserted into the transport plate (210) to guide a sliding movement of the transport plate (210).

11. The electrode transfer device (10) as claimed in claim 8 or claim 9, wherein the transport portion (320) comprises a rail portion (321) that is provided to face a magnet (221) provided on the transport plate (220) and forms a magnetic field to move the transport plate (220).

12. The electrode transfer device (10) as claimed in claim 11, further comprising a sensor (322) configured to measure a position and a speed of the transport plate (220) based on the magnetic field formed by the rail portion (321).

13. The electrode transfer device (10) as claimed in claim 8 or claim 9, wherein the transport portion (330) comprises:
a belt (331) fastened to the transport plate (230); and
a driving motor (332) configured to rotate the belt (331) to move the transport plate (220).

14. An electrode manufacturing system (1) comprising:
an electrode transfer table (100) on which an electrode sheet (S) for forming a pair of electrodes (S1, S2) is arranged;
a transport plate (200) to which the electrode transfer table (100) is fastened;
a transport portion (300) configured to move the transport plate (200); and
a cutting portion (30) configured to cut the electrode sheet (S) into a first electrode (S1) and a second electrode (S2) while the electrode sheet (S) is arranged on the electrode transfer table (100); and
a discharge portion (50) configured to discharge the cut first electrode (S1) and the cut second electrode (S2).

15. The electrode manufacturing system (1) as claimed in claim 14, further comprising:
an alignment inspection portion (20) configured to measure an arrangement state of the electrode sheet (S);
a quality inspection portion (41) configured to inspect whether the cut first electrode (S1) and the cut second electrode (S2) are defective; and
a defective electrode discharge portion (42) configured to discharge an electrode (SE) determined to be defective.
